# FASCICULE DE BREVET EUROPEEN

(11) **EP 0 666 047 B1**
(45) Date de publication et mention de la délivrance du brevet: **03.06.1998**
(21) Numéro de dépôt: 95630003.2
(22) Date de dépôt: 26.01.1995
(51) Int. Cl.: A47J 39/00, H05B 6/06

(54) **Procédé de remise à température d'un repas, récipient et appareil pour sa mise en oeuvre**
Verfahren zum Erwärmen einer Mahlzeit, Behälter und Gerät zur Durchführung des Verfahrens
Method for warming a meal, container and apparatus for carrying out the method

(30) Priorité: 02.02.1994 FR 9401156
(43) Date de publication de la demande: 09.08.1995
(73) Titulaire: FLORINIUS-INVESTIMENTOS E SERVICOS INTERNACIONAIS, LDA, PT-9000 Funchal, Madeira (PT)
(72) Inventeur: Kirsch, Norbert, L-1236 Luxembourg (LU)
(74) Mandataire: Waxweiler, Jean

(56) Documents cités:
- EP-A- 0 203 883
- EP-A- 0 285 552
- EP-A- 0 591 760
- BE-A- 877 365
- FR-A- 2 345 123
- US-A- 4 020 310
- US-A- 4 110 587

## Description

La présente invention concerne la remise à température de plats cuisinés dans un système de distribution de repas, et plus particulièrement un procédé de remise à température d'un repas composé d'une pluralité d'aliments préparés, déposés sur des plats dressés sur un plateau, un récipient et un appareil pour la mise en oeuvre de ce procédé.

Aujourd'hui les repas servis hors foyer, c-à-d. en cantine, clinique, maison de soins, etc, peuvent être livrés et préparés de deux façons. Les repas sont préparés soit par un catering extérieur, soit par une cuisine intérieure.

Les repas peuvent être livrés au lieu de restauration en deux liaisons différentes: c-à-d. une liaison froide suivie d'une remise en température, soit par induction, soit par conduction, - air pulsé - micro ondes - bain marie ou des contenants isolés ou bien maintenus en température, la température de livraison pouvant être + 4°C ou - 20°C; ou par une liaison chaude, sur un plateau isolé.

Dans un système de distribution de repas en liaison froide, les repas sont préparés et dressés sur les plateaux dans un chariot de transport qui peut être en même temps le chariot de réchauffage. Ce chariot est ensuite transporté sur le lieu de consommation où les repas sont remis en température.

Dans le système de distribution de repas en liaison chaude, les repas sont préparés et dressés dans des plateaux, qui peuvent être soit un plateau isolé (garde le chaud et froid pour une heure et demi), soit un plateau standard avec les produits isolés, qui garde la température pour 3/4 heure (base et dôme). Ensuite les plateaux sont mis dans un chariot et sont livrés le plus vite possible.

Dans le système à liaison chaude et plateau standard avec produits isothermes, les repas ne peuvent pas être préparés longtemps à l'avance (pas plus de 3/4 d'heure). La consommation du repas ne tolère aucun délai. Ce système permet un dressage flexible sur le plateau.

Dans le système à liaison froide avec système de réchauffage par conduction, le chauffage est fait par une plaque chauffante en dessous de l'assiette. Cette méthode a souvant pour effet de brûler les aliments au fond de l'assiette et de mal les réchauffer sur le dessus. Il faut des trous dans le plateau; donc un plateau spécial. Il faut aussi une place spéciale sur le plateau pour chauffer l'assiette et le bol à soupe, ce qui impose l'identicité des plateaux. Lorsque le chariot de réchauffage est le chariot de transport; il est très lourd, très chèr et très fragile. On ne peut pas mettre de repas spéciaux (qui doivent rester froids) dans le même chariot. Tout commence à chauffer par les plaques situées en dessous des assiettes. L'usage du chariot est délicat et l'entretien intensif parce qu'on utilise le chariot de chauffage pour le transport. C'est un système très cher, on a besoin d'autant de chariots avec plaques chauffantes que de repas servis. Le temps de chauffage varie entre 30 et 45 minutes.

Dans le système à liaison froide le système de chauffage par induction existant est fragile, les inducteurs se trouvant dans le chariot de transport. Une plaque argentée est fixée au fond de chaque assiette destinée à être réchauffée; donc ceci nécessite deux stocks d'assiettes, un pour les plats chauds et un pour les plats froids. Sur le plateau on a une zone chaude et une zone froide: pas de flexibilité. C'est un système cher, parce que le chariot de réchauffage est en même temps le chariot de transport. L'entretien est délicat parce que l'on touche souvent les inducteurs dans les manutentions de plateaux. Le chariot de transport est très lourd.

US-A-4 020 310 décrit un procédé de remise à température d'un repas selon le préambule de la revendication 1, qui utilise un récipient formé d'une partie inférieure creuse en matière plastique, dont l'intérieur est revêtu d'une feuille métallique réalisé de préférence en aluminium. Cette feuille en aluminium peut de préférence être séparée de la partie inférieure pour être jetée et la partie inférieure peut être réutilisée après avoir revêtu sa surface inférieure d'une nouvelle feuille métallique. Les aliments à réchauffer sont posés directement sur la feuille métallique sans utilisation d'un plat ordinaire. Le repas est dressé sur un plateau et le plateau est exposé à un champ électromagnétique produit à l'aide de plusieurs inducteurs au-dessus desquels le ou les récipients contenant un aliment à chauffer, doivent être positionnés exactement. Le récipient peut avoir une partie supérieure creuse en matière isolante revêtu à l'intérieur d'une feuille métallique.

Le but de l'invention est de créer un système de remise à chaud de repas qui ne présente pas les désavantages des systèmes connus à présent

Selon l'invention ce but est réalisé dans un procédé de remise à température d'un repas composé d'une pluralité d'aliments préparés, déposés sur des plats dressés sur un plateau, qui est caractérisé en ce que chaque plat contenant un aliment à réchauffer est conditionné dans un récipient isolé comprenant une matière magnétique et que le plateau, sur lequel les plats sont dressés, est exposé à un champ électromagnétique pour chauffer par induction ladite matière magnétique, qui réchauffe ledit aliment dressé sur le plat conditionné dans le récipient, soit par conduction et/ou rayonnement thermique.

Selon l'invention le récipient pour la mise en oeuvre du procédé comprend une base creuse en matière isolante, un dôme en matière isolante adapté à la base et une plaque de matière magnétique insérée soit dans la base, soit dans le dôme.

Par rapport à l'état de la technique décrit, le procédé selon l'invention procure les avantages mentionnés en fin de description.

L'invention sera maintenant décrite à titre d'exemple non-limitatif avec référence aux dessins annexés dans lesquels:
Les Fig. 1 et 2 représentent schématiquement en coupe un récipient pour la mise en oeuvre du procédé, un aliment à réchauffer étant représenté en outre dans la Fig. 2:
les Fig. 3 et 4 représentent schématiquement l'appareil pour la mise en oeuvre du procédé, en vue frontale et en vue latérale avec paroi latérale enlevée; et
les Fig. 5 et 6 représentent schématiquement l'appareil selon les Fig. 3 et 4, mais chargé d'un chariot porte-plateaux portant les repas à réchauffer.

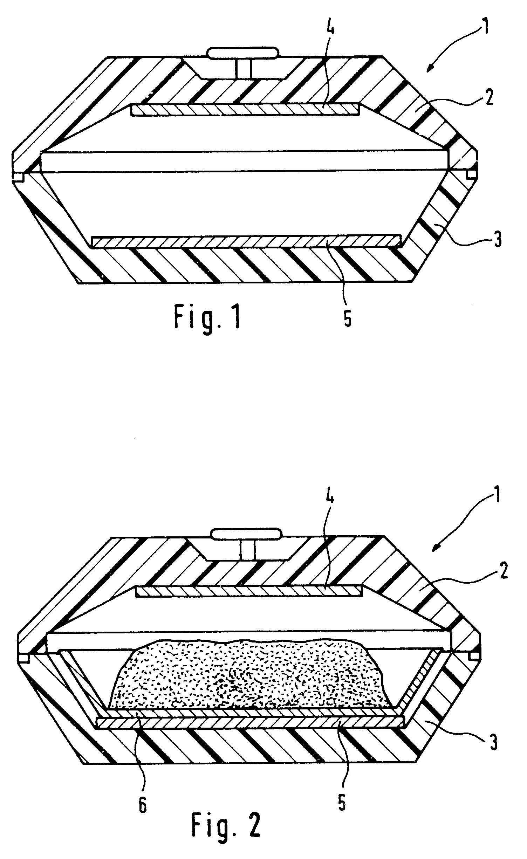

Dans le système de distribution et de rémise en température des repas avec liaison froide les repas sont préparés et conditionnés sous froid positif (+ 4°C) ou négatif (- 20°C) dans un service traiteur extérieur ou une cuisine intérieure. Ils sont dressés ensuite sur des plateaux 17 placés dans un chariot de transport 16 porte-plateaux standard maintenu à + 4°C. Les plats destinés a être réchauffés sont conditionnés dans des containers 1 isolés (système de dôme (2) et base (3) isolé) en mousse polyuréthane ou autre representés aux figures 1 et 2. Dans les containers 1 isolés deux plaques métalliques 4 et 5 en acier magnétique sont insérées l'une 4 dans le dôme 2, l'autre 5 dans la base 3. Les plaques 4,5 en acier magnétiques vont être chauffées lorsqu'elles sont exposées à un rayonnement électromagnétique adéquat et une assiette standard va être réchauffée par contact en dessous et par un rayonnement en dessus. Evidemment on peut prévoir seulement une plaque 4 ou 5 métallique dans le dôme ou la base. Cependant le fait d'avoir une plaque 4 au dessous va éviter la condensation d'eau dans le dôme 2.

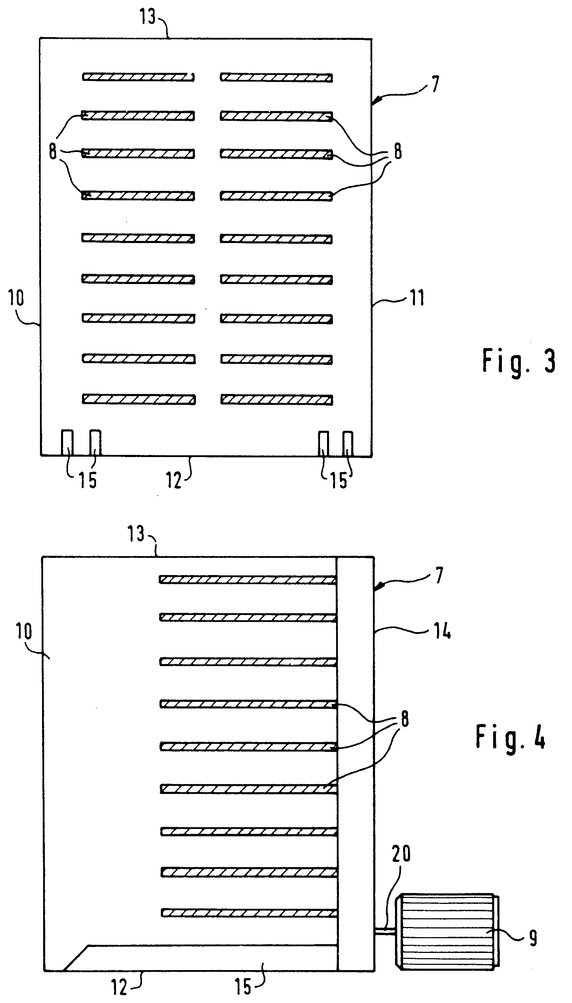

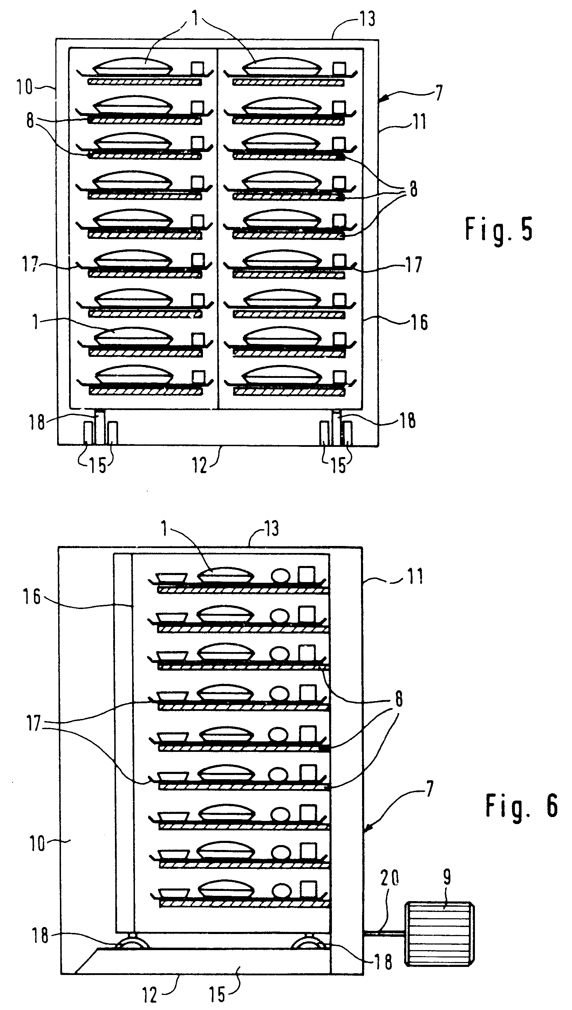

Le chariot 16 chargé des plateaux 17 portant chacun un repas est transporté sur le lieu de restauration. Ensuite il est gardé dans une chambre jusqu'à une heure avant la livraison des repas. Une heure ou une demi heure avant la distribution des repas, le ou les chariots 16 sont mis dans une armoire de réchauffage par induction 7 qui est installée à une place fixe, représentée aux figures 3 et 4.

On ouvre les portes de l'armoire 7 et on insère le chariot de transport 16 dans l'armoire. Les inducteurs 8, disposés en une ou plusieurs colonnes adjacentes l'un au-dessus de l'autre, se trouvent automatiquement placés sous les plateaux 17, sans les toucher, et vont remettre en température les aliments destinés à être chauffés sans aucune manutention des plateaux 17 après l'enclenchement d'un générateur 9 de courant électrique de moyenne et haute fréquence à la sortie duquel ils sont reliés par des conducteurs 10 appropriés reliés aux divers inducteurs 8. La nourriture va être réchauffée en environ 10 à 20 minutes. La chaleur accumulée par la plaque et l'isolation de la mousse ou autre vont augmenter le temps de maintien de la température du repas à 65°C. Après 20 minutes environ le réchauffage est terminé et on ouvre l'armoire 7, on prend le chariot de transport 16 et on va livrer les repas. Les aliments restent chauds pendant 1 heure grâce au dôme 2 et la base 3 autour de l'assiette 6 et grâce aux inserts métalliques 4, 5.

L'armoire 7 est une enceinte fermée à deux parois latérales 10, 11, une base 12, un plafond 13, une paroi arrière 14 et une ou plusieurs portes (non-montrées) articulées à l'enceinte pour fermer ladite enceinte sur le côté avant. Plusieurs rails de guidage sont prévus sur la base de l'armoire pour guider des roues 18 du chariot de transport 16 porte-plateaux à introduire dans l'armoire 7.

L'espacement des inducteurs 8 dans chaque colonne est tel que les plateaux placés sur le chariot de transport 16 sont placés chacun au-dessus ou en-dessous d'un inducteur respectif. Les dimensions des inducteurs 8 sont adaptées aux dimensions du chariot utilisé. S'il y a plusieurs colonnes d'inducteurs 8, leur espacement horizontal est adapté aux dimensions des chariots utilisés, qui peuvent être utilisés en un nombre égal au nombre de colonnes d'inducteurs 8. On peut imaginer une armoire 7 pourvu de moyens de support non-amovibles contrairement au moyen de support amovible ou chariot 16 décrit.

Il va de sci que les matériaux utilisés pour réaliser le chariot, les plateaux et l'armoire doivent être non-magnétiques, afin d'éviter leur échauffement et le gaspillage d'énergie. En outre il est évident que le fonctionnement des inducteurs ne doit pas brouiller le fonctionnement d'autres appareils voisins et que les normes en cette matière doivent être respectées.

On peut facilement imaginer que l'appareil ne comporte qu'un inducteur pour chauffer un seul plat. Alors évidement le chariot de transport peut être remplacé par un moyen de support fixe dans l'armoire, p.ex. deux rails recevant le plateau ou mobile de la façon d'un chariot. Le nombre d'inducteurs 8 à colonne, ainsi que le nombre de colonnes sont dictés par l'usage auquel l'armoire est destiné. Il en est de même du nombre de portes d'accès à l'armoire.

Tout chariot de transport porte-plateaux standard peut être utilisé. La distance entre plateaux doit évidemment s'harmoniser avec la distance entre les inducteurs 8.

Les avantages du procédé de remise à température d'un repas selon l'invention sont multiples. Il sont les suivants:
1 - Utilisation de l'équipement standard:
   Vaisselle standard, plateau standard, chariot de transport standard, etc., non-magnétique.
2 - Réduction de manutention:
   Dressage; tout le repas déjà sur le plateau.
   Remise en température; on met le chariot dans une armoire de réchauffage fixe.
   Livraison: les plateaux dressés sont déjà dans le chariot de transport.
   Du moment de livraison des chariots au lieu de restauration jusqu'au moment de livraison au client on ne touchera pas les plateaux.
3 - Réduction du temps de remise en température; seulement environ 20 minutes.
4 - Meilleur qualité de remise en température, pas de brûlage au fond de l'assiette (problème avec système à ccnduction).
5 - Augmentation du temps de conservation de la chaleur.
   Le dôme et la base gardent la chaleur, mais aussi les plaques métalliques qui sont placées dans le dôme et la base gardent la chaleur.
6 - Réduction du poids du chariot de transport par rapport au système existant de chauffage (induction et conduction). Le chauffage est dans une armoire fixe parce qu'on utilise un chariot standard sans appareillage électrique.
7 - Coût inférieur du chariot de transport. C'est un chariot standard.
8 - Entretien du chariot presque inexistant, parce que sans appareillage électrique.
9 - Multi usage du chariot, le chariot de transport peut être utilisé pour des livraisons différentes, repas froid, boisssons, etc.
10 - Possibilité d'avoir plusieurs plats chauds sur un même plateau sans limite de nombre des plats chauds.
11 - Possibilité de réchauffage à n'importe quel emplacement sur le plateau. Il n'existe pas une zone chaude et zone froide dictée par le plateau.
12 - L'armoire de chauffage ne sera jamais déplacée, cela limite les risques de panne.
13 - Une armoire de réchauffage suffit pour plusieurs chariots de transport. Investissement inférieur en gros équipement.

## Revendications

1. Procédé de remise à température d'un repas composé d'une pluralité d'aliments préparés déposés sur des plats (7) dressés sur un plateau (17), caractérisé en ce que chaque plat contenant un aliment à réchauffer est conditionné dans un récipient isolé (1) comprenant une matière magnétique (4,5) et que le plateau (17) sur lequel les plats sont dressés, est exposé à un champ électromagnétique pour chauffer par induction ladite matière magnétique (4,5), qui réchauffe ledit aliment dressé sur le plat conditionné dans le récipient (1) par conduction et/ou rayonnement thermique.

2. Procédé selon la revendication 1, caractérisé en ce qu'on utilise un récipient (1) du type dôme (2) et base (3), isolés ayant une plaque (5) de matière magnétique insérée dans sa base.

3. Procédé selon la revendication 1 ou 2, caractérisé en ce qu'on utilise un récipient (1) du type dôme (2) et base (3) isolés ayant une plaque (4) de matière magnétique inséré dans son dôme (2).

4. Récipient pour la mise en oeuvre du procédé selon la revendication 1, caractérisé en ce qu'il comprend une base (3) creuse en matière isolante, un dôme (2) en matière isolante adapté à la base (3) et une plaque (4,5) de matière magnétique insérée soit dans la base (3), soit dans le dôme (2).

5. Récipient selon la revendication 4, caractérisé en ce qu'il comprend deux plaques (4,5) de matière magnétique opposées, l'une étant insérée dans la base (3), l'autre dans le dôme (2).

## Claims

1. Process for reheating a meal consisting of a plurality of prepared foods presented on dishes (7) placed on a tray (17), characterised in that each dish containing a food to be reheated is packed in an insulated receptacle (1) comprising a magnetic material (4, 5), and that the tray (17), on which the dishes are presented, is exposed to an electromagnetic field for heating by induction said magnetic material (4, 5), which reheats said food presented on the dish packed in the receptacle (1) by conduction and/or by radiant heat.

2. Process according to Claim 1, characterised in that the receptacle (1) used is of the type with an insulated cloche (2) and base (3) and a plate (5) of magnetic material inserted in its base.

3. Process according to Claim 1 or 2, characterised in that the receptacle (1) used is of the type with an insulated cloche (2) and base (3) and a plate (4) of magnetic material inserted in its cloche (2).

4. Receptacle for implementing the process according to Claim 1, characterised in that it comprises a hollow base (3) made of an insulating material, a cloche (2) made of insulating material to fit the base (3) and a plate (4, 5) of magnetic material inserted either in the base (3) or in the cloche (2).

5. Receptacle according to Claim 4, characterised in that it comprises two opposing plates (4, 5) of magnetic material, one being inserted in the base (3) and other in the cloche (2).

## Patentansprüche

1. Verfahren zum Aufwärmen einer Mahlzeit, die aus mehreren zubereiteten Speisen besteht, welche in Schüsseln (6) angerichtet sind, die auf ein Tablett (17) gestellt sind, dadurch gekennzeichnet, daß jede Schüssel, die ein aufzuwärmendes Gericht enthalt, in einem isolierten Behälter (1) behandelt wird, der ein magnetisches Material (4, 5) aufweist, und daß das Tablett (17), auf welches die Schüsseln gestellt sind, mit einem elektromagnetischen Feld beaufschlagt wird, um das magnetische Material (4, 5) induktiv zu erwärmen, welches die in der Schüssel, die in dem Behälter (1) behandelt wird, angerichtete Speise mittels Wärmeleitung und/oder -strahlung aufwärmt.

2. Verfahren nach Anspruch 1, dadurch gekennzeichnet, daß ein Behälter (1) benutzt wird, der aus isoliertem Deckel (2) und isoliertem Unterteil (3) besteht und eine Platte (5) aus magnetischem Material aufweist, die in sein Unterteil eingesetzt ist.

3. Verfahren nach Anspruch 1 oder 2, dadurch gekennzeichnet, daß ein Behälter (1) benutzt wird, der aus isoliertem Deckel (2) und isoliertem Unterteil (3) besteht und eine Platte (4) aus magnetischem Material aufweist, die in seinen Deckel (2) eingesetzt ist.

4. Behälter zur Durchführung des Verfahrens nach Anspruch 1, dadurch gekennzeichnet, daß er ein hohles Unterteil (3) aus Isoliermaterial, einen Deckel (2) aus Isoliermaterial, welcher dem Unterteil (3) angepaßt ist, und eine Platte (4, 5) aus magnetischem Material, die entweder in das Unterteil (3) oder in den Deckel (2) eingesetzt ist, aufweist.

5. Behälter nach Anspruch 4, dadurch gekennzeichnet, daß er zwei entgegengesetzte Platten (4, 5) aus magnetischem Material aufweist, von denen die eine in das Unterteil (3) und die andere in den Deckel (2) eingesetzt ist.
